# EUROPÄISCHE PATENTANMELDUNG

(11) **EP 0 533 994 A1**
(43) Veröffentlichungstag der Anmeldung: **31.03.1993**
(21) Anmeldenummer: 91116593.4
(22) Anmeldetag: 27.09.1991
(51) Int. Cl.: G06F 15/16

(54) **Schnittstellensteuereinheit für ein Prozessorsystem**

(71) Anmelder: Siemens Nixdorf Informationssysteme Aktiengesellschaft, D-33102 Paderborn (DE)
(72) Erfinder: Brandt, Ulrich, Dipl.-Ing., W-8000 München 80 (DE); Kropsch, Norbert, Dipl.-Ing., W-8000 München 19 (DE)
(74) Vertreter: Fuchs, Franz-Josef, Dr.-Ing.

(57) **Zusammenfassung**

Die Schnittstellensteuereinheit (PPIC) ist zur Abwicklung des Meldeverkehrs zwischen den einzelnen Prozessoren modulförmig aus gleichartigen Schnittstellensteuermodulen (PPICM...) aufgebaut, die zu einer unidirektional arbeitenden Ringverbindung zusammengeschaltet sind. Bei Monoprozessorsystemen ist eine und bei Multiprozessorsystemen sind mehrere Prozessorschnittstellen (PSST...) für verschiedene Prozessoren (CPU, IOS, GSA) an jedem Schnittstellensteuermodul (PPICM...) vorgesehen. Mehrere bidirektionale Verbindungsleitungen (LK) an jedem Schnittstellensteuermodul zu anderen Modulen ermöglichen die Herstellung alternativer Ringverbindungen und Rekonfigurationen im Störungsfall.

## Beschreibung

Die Erfindung betrifft ein Prozessorsystem mit mindestens einem Verarbeitungsprozessor und mit einem Ein-/Ausgabeprozessor, bei dem die einzelnen Prozessoren über gesonderte Schnittstellen in Verbindung mit einer Schnittstellensteuereinheit unmittelbar Steuernachrichten untereinander austauschen können. Ein solches Prozessorsystem und die Schnittstellensteuereinheit sind beispielsweise in den Siemens Druckschriften U 64068-J, Kapitel I, Seiten 1-1 und 1-2, sowie U 64050-J, Kapitel II erläutert.

Bei den Steuernachrichten handelt es sich lediglich um Kurzmitteilungen von einem Prozessor an einen anderen oder an mehrere andere, zum Beispiel um Ein/Ausgabevorgänge einzuleiten oder deren Ausführung zu melden, während der eigentliche Informationsaustausch über einen für alle Prozessoren gemeinsamen Kommunikationsbereich im Arbeitsspeicher erfolgt.

Die Koordinierung des gesonderten Meldeverkehrs erfolgt durch eine zentrale Schnittstellensteuereinheit, die aus einem zentralen Verarbeitungsteil und je einem Nahtstellenmodul für jeden vorhandenen Prozessor besteht. Ein derartiger Aufbau der Schnittstellensteuereinheit bereitet bei einer Erweiterung des Prozessorsystems erhebliche Schwierigkeiten, insbesondere beim Übergang zu mehrere Monoprozessorsysteme umfassenden Multiprozessorsystemen, weil einerseits erhebliche Vorleistungen mit Bezug auf einen vorgegebenen möglichen Endausbau erbracht werden müssen, andererseits aber wegen des zentralen Verarbeitungsteiles die Verarbeitungsleistung begrenzt ist und nicht mit der Anzahl der Prozessoren gesteigert werden kannn.

Aufgabe der Erfindung ist es daher, ein Prozessorsystem mit einer Schnittstellensteuereinheit zu schaffen, die den jeweiligen Systemstrukturen des Prozessorsystem leicht angepaßt werden kann, ohne daß unnötige Vorleistungen zu erbringen sind und ohne daß Leistungseinbußen damit verbunden sind.

Diese Aufgabe wird gemäß den kennzeichnenden Merkmalen des Patentanspruches 1 gelöst. Danach besteht die neue Schnittstellensteuereinheit aus einer Reihe gleichartiger Schnittstellensteuermodule, die in einem unidirektional arbeitenden Ring zusammengeschaltet sind. Die Schnittstellensteuermodule arbeiten dabei als reine Vermittlungsknoten, indem sie Steuernachrichten von den Prozessorschnittstellen oder der ankommenden Ringverbindung entgegennehmen und dann abhängig von einer mitgeführten Zieladresse entweder an einen lokal angeschlossenen Prozessor oder über die abgehende Ringverbindung weiterleiten. Dadurch können alle Schnittstellensteuermodule in einer Ringverbindung parallel arbeiten, und die Verarbeitungsleistung der gesamten Schnittstellensteuereinheit wächst linear mit der Anzahl der Schnittstellensteuermodule und damit mit der Anzahl der Prozessoren.

Durch mehrere Prozessorschnittstellen an jedem Schnittstellensteuermodul für den Anschluß jeweils aller Prozessoren eines Monoprozessorsystems lassen sich in gleich einfacher und vorteilhafter Weise auch einheitliche Schnittstellensteuereinheiten für aus mehreren Monoprozessorsystemen modulartig aufgebaute Multiprozessorsysteme bilden.

Damit bei einem Monoprozessorsystem mit mehreren Prozessoren bzw. einem Multiprozessorsystem mit mehreren Monoprozessorsystemen der Ausfall einer Verbindungsleitung oder eines Prozessors bzw. eines Monoprozessorsystems ohne Auswirkungen bleibt, werden die einzelnen Schnittstellensteuermodule über bidirektionale Verbindungsleitungen mit mehreren anderen Schnittstellensteuermodulen der Schnittstellensteuereinheit verbunden und die Verbindungsleitungen so angeordnet, daß im Störungsfall auf eine mögliche andere Ringverbindung umgeschaltet werden kann.

Andere Weiterbildungen der Erfindung ergeben sich aus den Unteransprüchen 4 bis 16. Diese beziehen sich unter anderem
- auf die Steuerung für die Herstellung einer Ringverbindung,
- auf die Auswahl und Durchschaltung von Anforderungen in den einzelnen Schnittstellensteuermodulen,
- auf die unterschiedliche Behandlung von Anforderungen, die an einzelne Prozessoren oder aber an Gruppen von Prozessoren (Broadcasting) gerichtet sein können, und
- auf die Steuerung des Arbeitsablaufes in der Schnittstellensteuereinheit.

Einzelheiten der Erfindung seien nachfolgend anhand eines in der Zeichnung dargestellten Ausführungsbeispieles näher erläutert. Im einzelnen zeigen
- FIG 1: ein bekanntes Prozessorsystem mit herkömmlicher Schnittstellensteuereinheit,
- FIG 2: ein Multiprozessorsystem mit einer Schnittstellensteuereinheit gemäß der Erfindung,
- FIG 3A bis FIG 3E: Beispiele für die Anordnung der bidirektionalen Verbindungsleitungen zwischen den einzelnen Schnittstellensteuermodulen einer Schnittstellensteuereinheit bei unterschiedlichen Konfigurationen von Prozessoren oder Monoprozessorsystemen,
- FIG 4A bis FIG 4D: Beispiele für alternative Ringverbindungen in einem Oktosystem mit vier bidirektionalen Verbindungsleitungen an jedem Schnittstellensteuermodul,
- FIG 5: ein schematisches Strukturschaltbild eines der Schnittstellensteuermodule der Schnittstellensteuereinheit gemäß der Erfindung,
- FIG 6: ein Strukturschaltbild des ankommenden Teiles der Prozessorschnittstellensteuerungen in einem Schnittstellensteuermodul,
- FIG 7: eine Zusammenstellung der Daten der verschiedenen Steuernachrichten an den Prozessorschnittstellen eines Schnittstellensteuermoduls und deren Bedeutung,
- FIG 8: ein Strukturschaltbild der die Auswahl einer Anforderung treffenden Steuerschaltung,
- FIG 9: ein Strukturschaltbild für die Überwachung von Broad-Casting-Anforderungen in den einzelnen Schnittstellensteuermodulen,
- FIG 10: eine Zusammenstellung der Signaladern der unidirektional arbeitenden Ringverbindung und deren Bedeutung und
- FIG 11: ein Strukturschaltbild einer Schnittstellensteuereinheit mit synchroner Arbeitsweise in den einzelnen Schnittstellensteuermodulen der Ringverbindung.

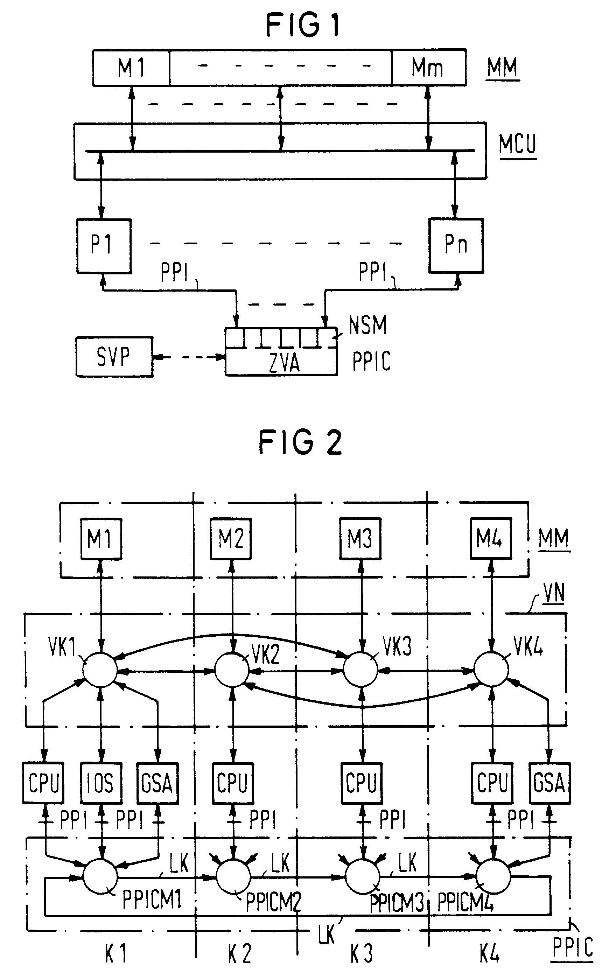

FIG 1 zeigt das Strukturbild eines herkömmlichen Prozessorsystems mit mehreren Prozessoren P1 bis Pn, die Verarbeitungsprozessoren und Ein-/Ausgabeprozessoren sein können und die über eine Speichersteuereinheit MCU auf die einzelnen Speichereinheiten M1 bis Mm eines gemeinsamen Speichers MM zugreifen können. Alle Prozessoren P1 bis Pn sind außerdem über eine Prozessor-/Prozessor-Schnittstelle PPI mit einer Schnittstellensteuereinheit PPIC verbunden, die aus einem zentralen Verarbeitungsteil ZVA und je einen Nahtstellenmodul NSM für den Anschluß eines der Prozessoren besteht und über die die einzelnen Prozessoren miteinander Kontakt aufnehmen können, um Meldungen auszutauschen. Der damit verbundene eigentliche Informationsaustausch zwischen den Prozessoren erfolgt über einen gemeinsamen Kommunikationsbereich im Speicher MM. Man siehe hierzu auch die eingangs genannten Druckschriften.

FIG 2 zeigt demgegenüber ein Prozessorsystem mit einer Schnittstellensteuereinheit PPIC, die modulartig aus einzelnen Schnittstellensteuermodulen PPICM1 bis PPICM4 aufgebaut ist, die wiederum über Verbindungsleitungen LK zu einer unidirektional arbeitenden Ringverbindung zusammengeschaltet sind. An jedes Schnittstellensteuermodul PPICM... kann bei als Monoprozessorsystem arbeitenden Prozessorsystemen je ein Prozessor über eine Schnittstelle PPI angeschlossen sein. Im vorliegenden Falle ist ein aus mehreren Monoprozessorsystemen K1 bis K4 bestehendes Multiprozessorsystem zugrundegelegt, und an jedes Schnittstellensteuermodul PPICM... sind jeweils alle Prozessoren, z.B. CPU, IOS und GSA, des jeweiligen Monoprozessorsystems, z.B. K1, angeschlossen. Außerdem ist die Speichersteuereinheit für den Zugriff der einzelnen Prozessoren zu den Speichereinheiten M... eines beispielsweise gemeinsamen Speichers MM als Vermittlungsnetzwerk VN mit dem Verbindungsknoten VK1 bis VK4 ausgebildet.

Unabhängig von der Struktur des Prozessorsystems, ob Monoprozessorsystem oder Multiprozessorsystem, läßt sich die gleiche Struktur für die Schnittstellensteuereinheit PPIC verwenden. Diese neue Struktur besteht aus einer Reihe von gleichartigen, in einer unidirektional arbeitenden Ringverbindung zusammengeschalteten Schnittstellensteuermodulen PPICM..., deren Anzahl sich allein nach der Anzahl der Prozessoren beim Monoprozessorsystem oder nach der Anzahl der Monoprozessorsysteme in einem Multiprozessorsystem richtet. Lediglich die Anzahl der Prozessorschnittstellen PPI an jedem Schnittstellensteuermodul PPICM... unterscheidet sich je nach Verwendung in einem Mono- oder in einem Multiprozessorsystem. Da aber in einem aus Monoprozessorsystemen modulartig zusammengesetzten Multiprozessorsystem die Anzahl der Prozessoren in jedem Monoprozessorsystem in der Regel beschränkt ist, z.B. auf drei verschiedene Prozessortypen, nämlich einen Verarbeitungsprozessor CPU, einen Ein-/Ausgabeprozessor IOS und einen Prozessor GSA bei Multiprozessorsystemen mit einem globalen Speicher, ist die Vorleistung in jedem Falle äußerst gering.

Ein andere Form der Vorleistung bezieht sich auf die Anzahl der an jedem Schnittstellensteuermodul PPICM... vorzusehenden Verbindungsleitungen zu mehreren anderen Schnittstellensteuermodulen. Für den Aufbau einer unidirektionalen Ringverbindung werden zwar nur jeweils eine ankommende und eine abgehende Verbindungsleitung LK... benötigt. Es ist aber offensichtlich, daß beim Ausfall nur einer dieser Verbindungsleitungen die Ringverbindung unterbrochen und damit die Schnittstellensteuereinheit PPIC nicht mehr arbeitsfähig ist.

FIG 3A bis FIG 3E zeigen eine Reihe von Verbindungskonfigurationen für aus zwei bis acht Schnittstellensteuermodulen bestehenden Anordnungen. Jeder Kreis K0 bis K7 kennzeichnet ein Schnittstellensteuermodul einer Schnittstellensteuereinheit. Die Verbindung zwischen den Kreisen stellen bidirektionale Verbindungsleitungen dar, die ankommend und/oder abgehend betrieben werden können.

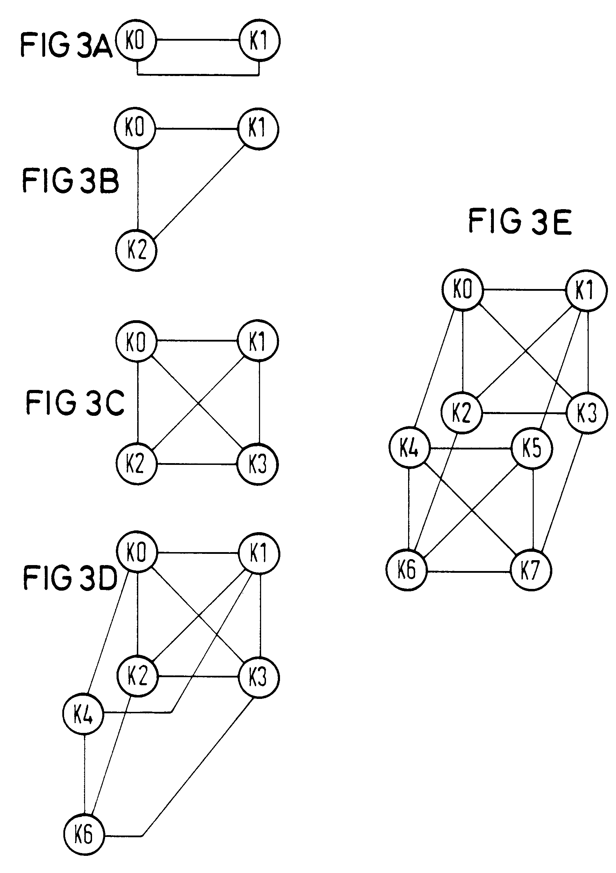

Mit zwei Verbindungsleitungen an jedem Schnittstellensteuermodul läßt sich eine Zweierkombination gemäß FIG 3A mit Leitungsredundanz oder eine Dreierkombination mit FIG 3B ohne Leitungsredundanz bilden. Die Viererkombination gemäß FIG 3C erfordert jeweils drei Verbindungsleitungen, mit denen sich auch eine redundante Dreierkombination bilden ließe. Eine Sechser- oder Achterkombination gemäß FIG 3D bzw. FIG 3E erfordert dagegen Schnittstellensteuermodule mit vier angeschlossenen Verbindungsleitungen.

Bezogen auf einen maximal vorgegebenen Endausbau ist also je Schnittstellensteuermodul eine gewisse Vorleistung zu erbringen, die aber im Vergleich zum übrigen System insbesondere wenn bei einem Multiprozessorsystem ein komplettes Monoprozessorsystem von einem Schnittstellensteuermodul bedient wird, nicht so ins Gewicht fällt, andererseits aber die Betriebssicherheit erheblich steigert, da alternative Ringverbindungen aufgebaut werden können oder bei ausgefallenen Prozessoren oder Monoprozessorsystemen die Ringverbindung unter Umgehung des zugehörigen Schnittstellensteuermoduls rekonfiguriert werden kann.

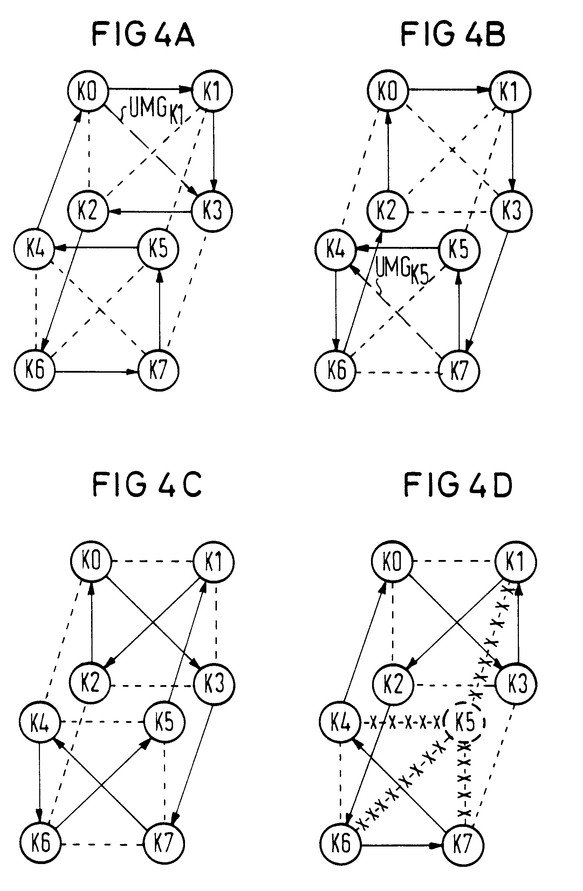

FIG 4A bis FIG 4C zeigen bezogen auf eine Achterkombination gemäß FIG 3E alternative Ringverbindungen, die durch ausgezogene gerichtete Verbindungslinien zwischen den Kreisen K0 bis K7 dargestellt sind. Die gestrichelten Diagonalleitungen UMG_{K1} bzw. UMG_{K5} in FIG 4A bzw. FIG 4B deuten die Rekonfigurationen der Ringverbindung nach Ausfall des K1 bzw. K5 entsprechenden Schnittstellensteuermoduls an, während die gepunkteten Verbindungslinien nicht benutzte Verbindungsleitungen darstellen. Die Gegenüberstellung von FIG 4A und FIG 4B läßt außerdem erkennen, wie Leitungsausfälle in einer bestehenden Ringverbindung durch alternative Ringverbindungen ohne Auswirkung bleiben. So können z.B. folgende Verbindungsleitungen K2 → K3, K6 → K7, K4 → K0 in der Ringverbindung von FIG 4A gleichzeitig ausfallen, ohne daß die Arbeitsfähigkeit beeinträchtigt wird, wenn auf die alternative Ringverbindung gemäß FIG 4B umgeschaltet wird.

Eine weitere, die Diagonalverbindungen einbeziehende Alternative zeigt FIG 4C, während FIG 4D dazu die rekonfigurierte Ringverbindung nach Ausfall des Prozessors oder Prozessorsystems von K5 zeigt, wobei die nicht benutzbaren Verbindungsleitungen an K5 zusätzlich durch Kreuzchen gekennzeichnet sind.

Diese wenigen Beispiele zeigen bereits, wie mit einer beschränkten Anzahl von Verbindungsleitungen an jedem Schnittstellensteuermodul vielfältige Möglichkeiten zur Gestaltung einer Ringverbindung geschaffen werden können. Außerdem besteht mit Bezug auf größere Multiprozessorsysteme die Möglichkeit, größere Netzwerke in redundante Duplexsysteme aufzuspalten, z.B. ein Achtersystem gemäß FIG 3E in zwei Vierersysteme gemäß FIG 3C.

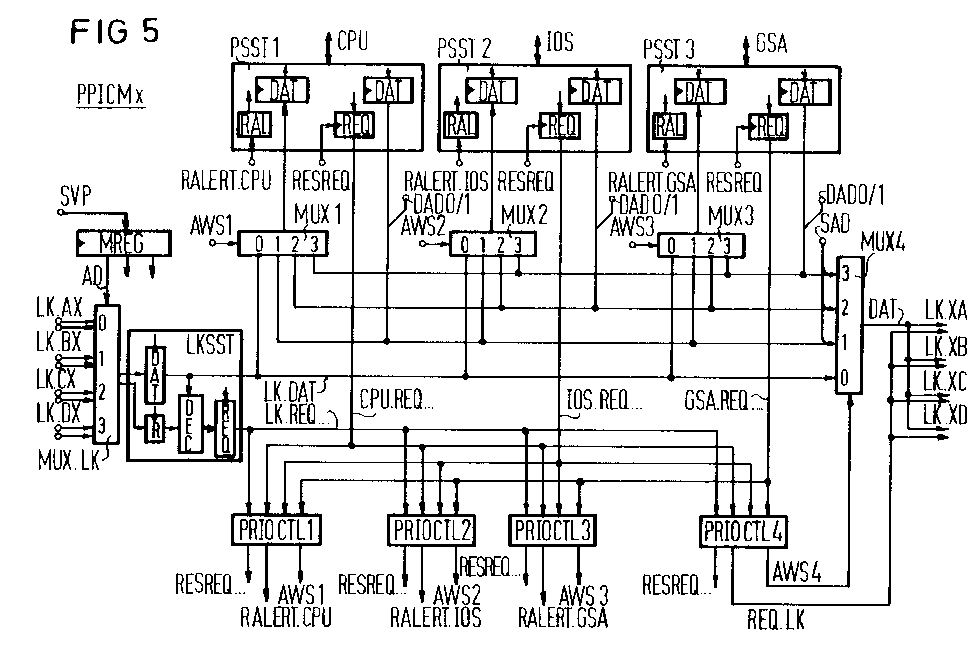

FIG 5 zeigt den strukturellen Aufbau eines Schnittstellensteuermoduls PPICMx mit Anschlüssen für vier Verbindungsleitungen ankommend, nämlich LK.AX bis LK.DX, und abgehend, nämlich LK.XA bis LK.XD, und drei Prozessorschnittstellensteuerungen PSST1 bis PSST3 für drei Prozessoren, z.B. CPU, IOS und GSA, sowie die Steuerschaltungen PRIOCTL1 bis PRIOCTL4 und MUX1 bis MUX4 für die Wegesteuerung innnerhalb des Schnittstellensteuermoduls.

Jeweils eine ankommende Verbindungsleitung, z.B. LK.AX, und eine abgehende Verbindungsleitung, z.B. LK.XA, bilden dabei eine bidirektionale Verbindungsleitung zwischen einem der anderen Schnittstellensteuermodule, z.B. A, und dem dargestellten Modul X. Die ankommenden Verbindungsleitungen LK.AX bis LK.DX sind auf einen Auswahlschalter MUX.LK geführt, der abhängig von der Einstelladresse AD im Modusregister MREG eingestellt wird. Die Modusregister MREG aller Schnittstellensteuermodule PPICM... einer Schnittstellensteuereinheit PPIC sind z.B. vom Serviceprozessor SVP in vorgegebener Weise mit einer Einstelladresse AD ladbar. Andererseits werden über die abgehende Ringverbindung weiterzuleitende Steuernachrichten parallel an alle angeschlossenen abgehenden Verbindungsleitungen, z.B. LK.XA bis LK.XD, übergeben, so daß allein durch Auswahl jeweils nur einer ankommenden Verbindungsleitung durch den Auswahlschalter MUX.LK in jedem Schnittstellensteuermodul die jeweils gewünschte Ringverbindung vom Serviceprozessor SVP aus herstellbar ist oder von einer bestehenden Ringverbindung auf eine andere umgeschaltet bzw. ein System neu konfiguriert werden kann.

Die jeweils vom Auswahlschalter MUX.LK wirksam geschaltete ankommende Verbindungsleitung, z.B. LK.AX, mündet in einer ankommenden Schnittstellensteuerung LKSST, die in ähnlicher Weise wie die Prozessorschnittstellen PSST... ankommende Anforderungen auswertet und ein individuelles Anforderungssignal LK.REQ... für jedes der anzusteuernden Ziele, nämlich die lokalen Prozessoren CPU, IOS und GSA und/oder die weiterführende Verbindungsleitung LK.X... erzeugt und die jeweilige Steuernachricht DAT zwischenspeichert, bis sie weitergeleitet werden kann.

Für jedes der erreichbaren Ziele ist eine Prioritätssteuereinheit und ein Auswahlschalter, z.B. PRIOCTL1 und MUX1 für den lokalen Prozessor CPU, vorgesehen. Die Prioritätssteuereinheiten PRIOCTL... werten jeweils die auf dasselbe Ziel bezogenen individuellen Anforderungen LK.REQ..., CPU.REQ..., IOS.REQ... und GSA.REQ... aus, wobei z.B. die genannte Reihenfolge gleichzeitig die bestehende Prioritätsreihenfolge mit fallender Prioriät angibt, d.h. Anforderungen über die Ringverbindung genießen die höchste Prioriät.

Abweichend von einer anderen Steuerungsmöglichkeit mit nur einer Prioritätssteuereinheit PRIOCTL für alle möglichen individuellen Anforderungssignale ....REQ.... und Weiterleitung nur jeweils einer Steuernachricht entsprechend der jeweils ausgewählten Anforderung können auf die gezeigte Weise mehrere Anforderungen parallel berücksichtigt und deren Steuernachrichten weitergeleitet werden. Beim gezeigten Ausführungsbeispielen gemäß FIG 5 sind das maximal vier gleichzeitig herstellbare Nachrichtenwege, z.B.
CPUx → IOSx (lokale Verbindung)
IOSx → IOSy (Ringverbindung abgehend)
CPUv → GSAx (Ringverbindung ankommend)
GSAx → CPUx (lokale Verbindung),
wobei die Indices v, x und y unterschiedliche Schnittstellensteuermodule bezeichnen. Bei m Prozessoren an jedem Modul und n Modulen in einer Schnittstellensteuereinheit können also insgesamt n x (m+l) Verbindungswege gleichzeitig hergestellt und entsprechend viele Steuernachrichten gleichzeitig verarbeitet werden.

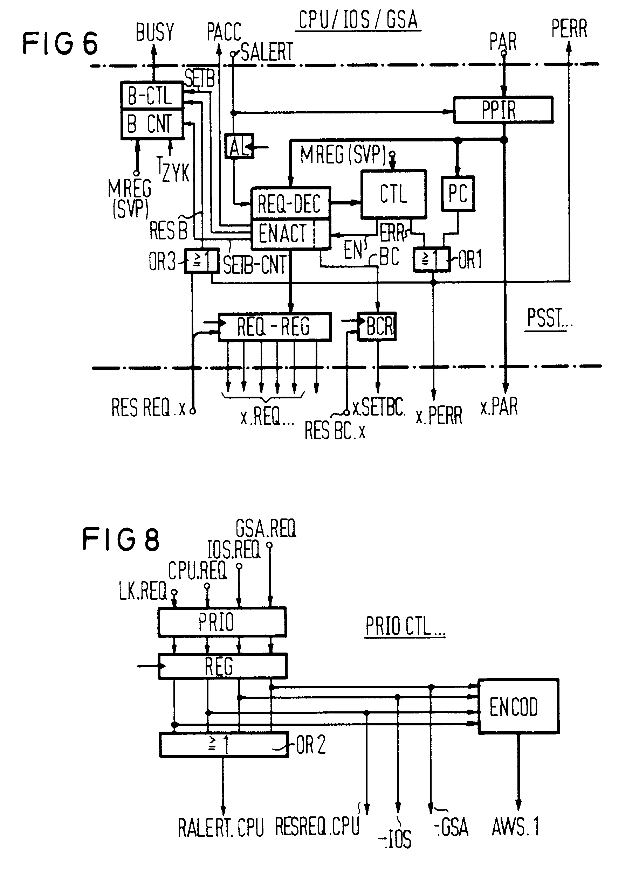

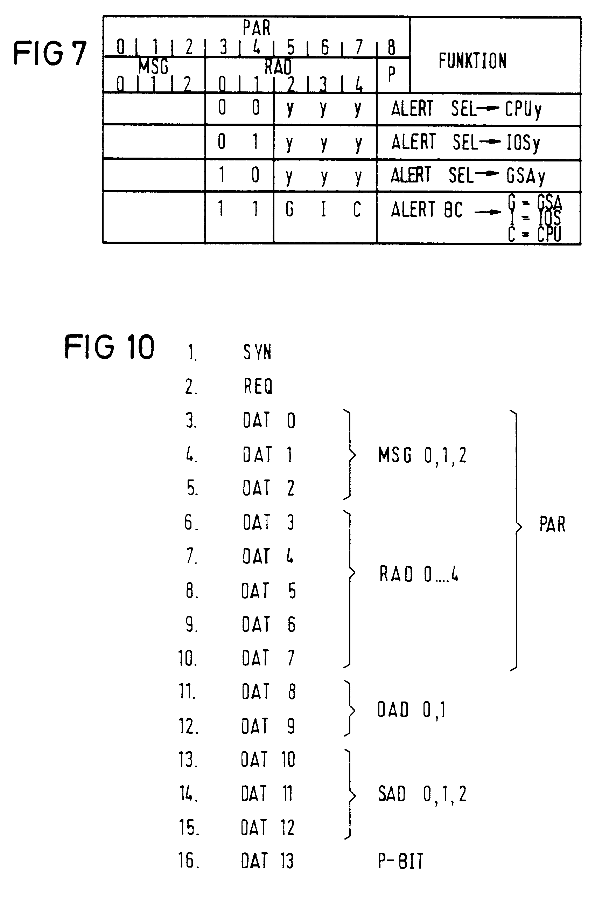

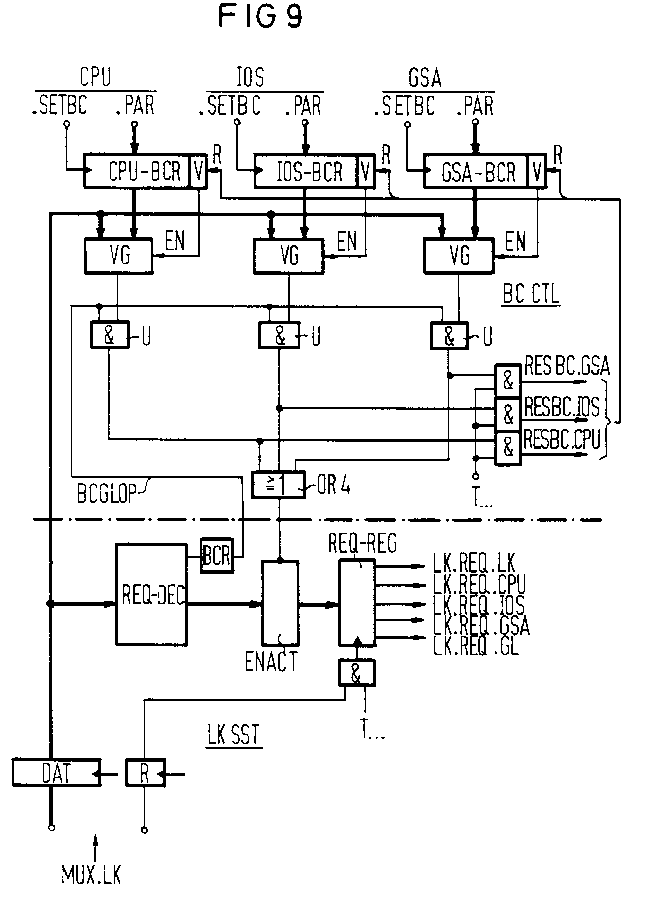

FIG 6 zeigt ein strukturelles Schaltbild des ankommenden Teils der einzelnen Schnittstellensteuerungen PSST... von FIG 5. Jede Anforderung wird vom angeschlossenen Prozessor mit einem Signal SALERT zusammen mit dem zugehörigen Parameterwort PAR der Steuernachricht gemeldet und in Register AL und PPIR übernommen. Den Aufbau des Parameterwortes PAR zeigt FIG 7. Es besteht z.B. aus insgesamt acht Bit, nämlich den Bits 0 bis 2 für die zu übertragende Meldung MSG, den Bits 3 bis 7 als Kennzeichen RAD für die Ansteuerung nur eines vorgegebenen Prozessors bzw. vorgegebener Gruppen von Prozessoren und dem Bit 8 als Paritätsbit P.

Das Kennzeichen RAD gliedert sich in zwei Teile, von denen die Bits RAD0 und RAD1 mit den Bitgruppen "00", "01" und "10" eine Steuernachricht ALERT SEL für jeweils einen der durch die Bits RAD2 bis RAD4 gekennzeichneten Prozessoren CPUy bzw. IOSy bzw. GSAy und mit der Bitgruppe "11" eine Gruppensteuernachricht ALERT BC an eine oder mehrere ganze Gruppen von Prozessoren anzeigen.

Die Paramterdaten PAR aus dem Register PPIR werden jeweils einem Anforderungsdecoder REQ-DEC zugeleitet, der jeweils nach Vorliegen eines Anforderungssignals SALERT freigegeben wird und der die Bits RAD... des Parameterwortes auswertet, indem er prüft, ob entweder eine einzelne Steuernachricht oder eine Gruppensteuernachricht zu übertragen ist. Außerdem werden abhängig davon individuelle Anforderungssignale x.REQ... erzeugt, und zwar ein einziges individuelles Anforderungssignal bei Übertragung einer einzelnen Steuernachricht oder jeweils ein individuelles Anforderungssignal für die von einer Gruppennachricht betroffenen Prozessorgruppen und für die abgehende Ringverbindung.

Die vom Anforderungsdecoder REQ-DEC bereitgestellten Signale werden nachfolgend durch die Schaltergruppe ENACT nur freigegeben, wenn eine Überwachungseinrichtung CTL mit EN das vorliegende Parameterwort für gültig erachtet. So wird z.B. überprüft, ob der bzw. die im Parameterwort als Empfänger gekennzeichneten Prozessoren überhaupt im Prozessorsystem konfiguriert sind und ob das Parameterwort vollständig ist, also beispielsweise bei Vorliegen einer Gruppensteuernachricht auch eine Prozessorgruppe angegeben ist.

Die nach dieser Prüfung freigegebenen individuellen Anforderungssignale werden dann in einem Anforderungsregister REQ-REG und ein gegebenenfalls vorliegendes Gruppensteuersignal BC im Register BCR gespeichert, von wo aus sie der Steuerschaltung im Schnittstellensteuermodul zugeführt werden.

FIG 8 zeigt eine der die individuellen Anforderungssignale auswertenden Prioritätssteuereinheiten PRIOCTL.... Diese bestehen aus einer Prioritätsschaltung PRIO, die aus den jeweils vorliegenden individuellen Anforderungssignalen LK.REQ, CPU.REQ, IOS.REQ und GSA.REQ aller Sendequellen mit Bezug auf einen Empfänger, z.B. CPU, das jeweils bevorrechtigte Anforderungssignal auswählt und in Form einer "l aus n"-Markierung im Register REG speichert. Aus den gespeicherten Signalen erzeugt dann ein Codierer ENCOD das jeweilige Einstellsignal, z.B. AWS1, für den zugehörigen Auswahlschalter, MUX1 in FIG 5, der dann die Steuernachricht der ausgewählten Sendequelle zum Empfänger, im vorliegenden Falle dem abgehenden Teil der Prozessorschnittstellensteuerung PSST1, durchschaltet.

Parallel dazu wird durch das ODER-Glied OR2 ein Anforderungssignal RALERT.CPU für den Empfänger erzeugt. Außerdem wird das im Register REG gespeicherte ausgewählte individuelle Anforderungssignal als individuelles Rücksetzsignal RES.CPU bzw. RES.IOS bzw. RES.GSA für das Rücksetzen des das ausgewählte individuelle Anforderungssignal bereitstellenden Anforderungsregisters REQ-REG der als Sender arbeitenden lokalen Schnittstellensteuerung PSST... verwendet, wobei im vorliegenden Fall auf ein gesondertes Rückstellsignal für die Schnittstellensteuerung LKSST der ankommenden Verbindungsleitung verzichtet wird.

Handelt es sich um die Verarbeitung einer Gruppensteuernachricht, dann wird dem vom Anforderungsdecoder REQ-DEC gelieferten und im Register BCR der jeweiligen Schnittstellensteuerung zwischengespeicherten Gruppensignal x.SETBC (FIG 6) in einer zusätzlichen Gruppensteuerungseinheit BCCTL gemäß FIG 9 eines jeden Schnittstellensteuermoduls das jeweils zugehörige Parameterwort PAR in einem der jeweiligen Prozessorschnittstelle PSST... zugeordneten Register CPU-BCR bzw. IOS-BCR bzw. GSA-BCR gespeichert und ein zugehöriges Gültigkeitsbit V gesetzt. Außerdem wird jede von der Ringverbindungsleitung ankommend bereitgestellte empfangene Steuernachricht bezüglich des mitgeführten Parameterwortes mit den in den Registern ..-BCR hinterlegten gültigen Parameterwörtern durch Vergleicher VG verglichen, die jeweils durch das zugehörige Gültigkeitsbit mit EN freigegeben werden.

Damit dieser Vergleich in jedem Schnittstellensteuermodul PPICM... bezogen auf den jeweils sendenden Prozessor erfolgen kann, um festzustellen, daß eine Gruppensteuernachricht über alle Schnittstellensteuermodule hinweg übertragen worden ist und damit auch alle anzusprechenden Prozessoren erreicht hat, wird dem Parameterwort PAR gemäß FIG 7 der die Nachricht auslösenden lokalen Prozessoren jeweils noch eine Absenderidentifizierung, z.B. DADO/1 in FIG 5, für die Aussendung über die jeweils abgehende Verbindungsleitung LK... zugesetzt.

Diese Absenderidentifizierung wird im vorliegenden Falle in jedem Vergleicher VG überprüft und davon abhängig der zuständige Vergleicher freigegeben. Hat weiterhin der Anforderungsdecoder REQ-DEC der Schnittstellensteuerung LKSST eine Gruppensteuernachricht erkannt, wird außerdem ein entsprechendes Steuersignal BCGLOP erzeugt, das die den Ausgängen der Vergleicher VG nachgeschalteten UND-Glieder U freigibt, so daß über das ODER-Glied OR4 die Schaltergruppe ENACT gesperrt wird. Dadurch wird eine Übernahme der vom Anforderungsdecoder REQ-DEC abgeleiteten individuellen Anforderungssignale LK.REQ... in das Anforderungsregister REQ-REG verhindert und damit die Weiterleitung der Gruppensteuernachricht unterbunden. Außerdem wird mit dem vom jeweiligen UND-Glied U abgeleiteten Rücksetzsignal RESBC... das entsprechende Gültigkeitsbit V wieder gelöscht und das Register BCR (FIG 6) in der zugehörigen lokalen Prozessorschnittstellensteuerung PSST wieder zurückgesetzt.

Statt der absenderbezogenen Auswahl der Vergleicher VG in FIG 9 kann auch ein absenderbezogenes Signal BCGLOP... vom Anforderungsdecoder REQ-DEC erzeugt werden, durch das dann nur das jeweils zugehörige UND-Glied U freigegeben wird.

Die anhand von FIG 9 beschriebene Steuerung erfordert für eine Gruppensteuernachricht in üblicher Weise das Durchlaufen aller Schnittstellensteuermodule PPICM... einer Ringverbindung. Verwendet man als Absenderidentifikation nicht ein prozessorindividuelles Kennzeichen, sondern ein auf den jeweiligen Prozessortyp bezogenes Kennzeichen, so können parallel von Prozessoren gleichen Typs an verschiedenen Schnittstellensteuermodulen ausgesendete Gruppensteuernachrichten mit übereinstimmendem Parameterwort auf insgesamt einen Ringdurchlauf beschränkt werden, d.h. die z.B. von einem Prozessor A ausgehende Gruppensteuernachricht wird am Schnittstellensteuermodul des Prozessors B beendet, während die vom Prozessor B ausgehende übereinstimmende Gruppensteuernachricht am Schnittstellensteuermodul des Prozessors A beendet wird.

FIG 10 zeigt eine Zusammenstellung der für die Verbindungsleitungen LK... zwischen den einzelnen Schnittstellensteuermodulen einer Ringverbindung benötigten Signaladern. Es sind dies neben der Anforderungsleitung REQ die Datenleitungen DAT0 bis DAT7 entsprechend dem Parameterwort PAR von FIG 7 und wenigstens die Datenleitungen DAT8 und DAT9 für die Absenderidentifizierung DAD, sowie die Datenleitung DAT13 für die Paritätssicherung der Datenleitungen. Weiterhin können Datenleitungen DAT10 bis DAT12 für die Kennzeichnung des die Steuernachricht veranlassenden Schnittstellensteuermoduls PPICM... und damit des zuständigen Knotens vorgesehen sein, damit bei Multiprozessorsystemen mit zusätzlichem globalen Speicher, der über die Prozessoren GSA ansteuerbar ist, der globale Speicher Daten unmittelbar an das zuständige Arbeitsspeichermodul M (FIG 2) übertragen kann. Diese zusätzliche Kennzeichnung SAD... wird ähnlich der für die Absenderidentifizierung DAD... in jedem Schnittstellenmodul dem über die abgehende Verbindungsleitung LK.X.. weiterzuleitenden Parameterwort der lokalen Prozessoren zugefügt, und zwar am Eingang des Auswahlschalters MUX4 (FIG 5).

Neben den genannten Signalleitungen werden weitere Signalleitungen für die Steuerung des Verbindungsverkehrs zwischen den einzelnen Schnittstellensteuermodulen einer Ringverbindung benötigt, was aber von der Art des gewählten Übertragungsverfahrens und der Arbeitsweise in den einzelnen Schnittstellenmodulen abhängig ist. Im vorliegenden Fall ist unterstellt, daß alle Schnittstellensteuermodule takt- und phasensynchron arbeiten, d.h. fortlaufend aus mehreren Phasentakten bestehende und in allen Modulen synchron ablaufende Arbeitszyklen durchlaufen werden, so daß nur eine Steuerleitung SYN zur Synchronisierung erforderlich ist.

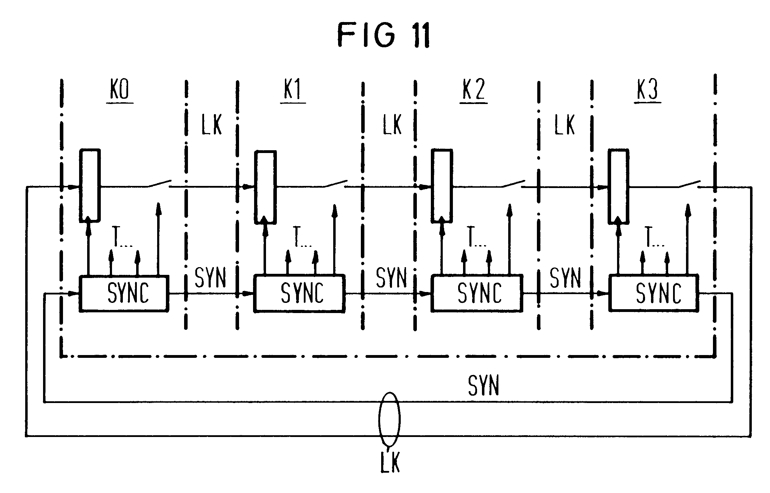

FIG 11 zeigt ein entsprechendes Strukturbild für die phasensynchrone Übertragung auf der Ringverbindung einer Schnittstellensteuereinheit PPIC. In jedem Schnittstellensteuermodul entsprechend den Knoten K0 bis K3 ist eine Synchronisiereinrichtung SYNC vorgesehen, die über die Signalleitung SYN phasensynchron arbeiten und beispielsweise jeweils vier Phasentakte T... erzeugen. Mit einem der Phasentakte werden jeweils Steuernachrichten vom vorgeschalteten Schnittstellensteuermodul in ein Register übernommen. Mit zwei weiteren Phasentakten erfolgt die Auswertung der Anforderungen und die Wegeauswahl und mit einem vierten Takt schließlich die Weiterleitung der Steuernachricht zum nächsten Schnittstellensteuermodul, so daß das dortige Register die Steuernachricht übernehmen kann. Da alle Register der Ringverbindung gleichzeitig mit der gleichen Taktflanke des gleichen Phasenimpulses geschaltet werden, könne infolge der Verzögerungen auf den Verbindungsleitungen LK schaltzeitbedingte Verfälschungen der einzelnen Steuernachrichten bei der Übertragung nicht auftreten.

Eine solche synchrone Arbeitsweise aller Schnittstellenmodule einer Schnittstellensteuereinheit ermöglicht den größten Datendurchsatz und erfordert den geringsten Aufwand an den Schnittstellen für die ankommende und abgehende Verbindungsleitung der einzelnen Schnittstellensteuermodule.

Selbstverständlich ist die modulartige Strukturierung der Schnittstellensteuereinheit auch für einen asynchronen Übertragungsbetrieb geeignet. Doch erfordert ein solcher bekanntlich zusätzliche Pufferspeicher an den einzelnen Schnittstellen und zusätzliche Steuersignale auf den Verbindungsleitungen.

Ein asynchroner Betrieb ist dagegen für die einzelnen Prozessorschnittstellensteuerungen PSST... gemäß FIG 6 vorgesehen. Nach jeder von der Schnittstellensteuerung übernommenen Meldung in die Register PPIR und AL erhält der jeweils angeschlossene Prozessor Rücksignale, und zwar nach Prüfung durch die Kontrolleinrichtung CTL und der Paritätsprüfung mit PC entweder eine Fehlermeldung PERR oder eine Annahmemeldung PACC. Außerdem wird die Schnittstellensteurung durch ein Belegtsignal BUSY gegen weitere Anforderungen gesperrt, bis die mit der Anforderung verbundene Steuernachricht weitergeleitet und das Anforderungsregister REQ-REG wieder zurückgesetzt wird.

Für diese asynchrone Steuerungsweise ist aber folgende Besonderheit zu beachten: Wie bereits erwähnt, werden die von den einzelnen Schnittstellen vorliegenden Anforderungen für die abgehende Verbindungsleitung in Folge abgearbeitet und eine Anforderung bleibt solange bestehen, bis sie weitergeleitet ist. Hat die Anforderung dagegen das Schnittstellensteuermodul abgehend verlassen, kann sie nicht mehr aufgehalten oder verzögert werden. Um ihre Laufzeit zum Empfänger nicht unnötig zu verzögern, werden die ankommenden Verbindungsleitungen in allen Schnittstellensteuermodulen mit Vorrang vor den lokalen Anforderungen der Prozessoren behandelt. Die abgehende Verbindungsleitung ist daher immer dann für die Weiterleitung von lokalen Anforderungen gesperrt, wenn gleichzeitig eine Anforderung auf der ankommenden Verbindungsleitung zur Weiterleitung über die abgehende Verbindungsleitung vorliegt. Aus diesem Grunde kann beim Zusammentreffen von ungünstigen Sender-/Empfängerbeziehungen, bei denen alle Steuernachrichten über die Ringverbindung zu übertragen sind, eine abgehende Verbindungsleitung beliebig lange gegenüber lokalen Anforderungen blockiert sein.

Um dies zu verhindern, werden die Belegtsignale BUSY bei Anforderung für die abgehendende Verbindungsleitung für eine vorgegebene Mindestdauer aufrechterhalten. Diese Mindestdauer ist abhängig von der Anzahl der an die Schnittstellensteuereinheit angeschlossenen Prozessoren als Sender und der größtmöglichen Verarbeitungsdauer T_{Vmax} vom Eintreffen einer Steuernachricht über eine ankommende Verbindungsleitung bis zu deren Weiterleitung über die abgehende Verbindungsleitung. Um sicherzustellen, daß jeder von insgesamt n Prozessoren nacheinander wenigstens eine Anforderung absetzen kann, ist diese Mindestzeit wenigstens gleich (n+1) x T_{Vmax} oder bei synchroner Übertragungssteuerung für die Ringverbindung mit vorgegebenen Arbeitszyklen wenigstens gleich (n+l) Arbeitszyklen. Zur Vorgabe dieser Mindestdauer wird das Belegtsignal BUSY z.B. von einem auf die Mindestdauer einstellbaren Binärzähler B-CNT in Verbindung mit einer nachgeschalteten Steuereinrichtung B-CTL erzeugt. Dieser Zähler wird bei Annahme einer über die abgehende Verbindungsleitung weiterzuleitenden Anforderung jeweils auf den voreinstellbaren Wert, der vom Serviceprozessor SVP über das Modusregister MREG vorgegeben wird, gesetzt (Signal SETB-CNT) und durch ein periodisch wiederkehrendes Taktsignal T_{Zyk} schrittweise zurückgestellt. Bei Anforderungen für die abgehende Verbindungsleitung entfällt damit das Belegtsignal BUSY erst wieder, wenn der Zähler B-CNT die Nullstellung erreicht hat. Bei synchroner Übertragungssteuerung wird der Zähler B-CNT beispielsweise auf den Wert n+l eingestellt und mit jedem Arbeitszyklus um einen Schritt zurückgesetzt. Handelt es sich dagegen um Anforderungen für lokale Prozessoren, wird der Zähler B-CNT dagegen nicht gesetzt, sondern mit dem Signal SETB an die Steuereinrichtung B-CTL das Signal BUSY ausgelöst, das dann vom entsprechenden Rücksetzsignal RESREQ.x über das ODER-Glied OR3 mit RESB unmittelbar wieder gelöscht wird. Die Schnittstelle wird also in diesem Fall sofort nach Weiterleitung der Steuernachricht für weitere Anforderungen wieder freigegeben.

## Patentansprüche

1. Prozessorsystem mit mindestens einem Verarbeitungsprozessor (CPU) und einem Ein-/Ausgabeprozessor (IOS), bei dem die einzelnen Prozessoren über gesonderte Schnittstellen (PPI) in Verbindung mit einer Schnittstellensteuereinheit (PPIC) unmittelbar Steuernachrichten untereinander austauschen können,
**dadurch gekennzeichnet,**
- daß die Schnittstellensteuereinheit (PPIC) aus gleichartigen Schnittstellensteuermodulen (PPICM...) mit wenigstens einer Prozessorschnittstelle (PSST...) für einen der Prozessoren (z.B. CPU) besteht,
- daß alle Schnittstellensteuermodule (PPICM...) über Verbindungsleitungen (LK...) zu einer unidirektional arbeitenden Ringschaltung zusammengeschaltet sind und
- daß durch in den einzelnen Schnittstellensteuermodulen (PPICM...) vorgesehene Steuerschaltungen (PRIOCTL/MUX) der jeweils benötigte Verbindungsweg zwischen einem der Prozessoren (z.B. CPU) als Sender und einem der Prozessoren (z.B. IOS) als Empfänger unmittelbar oder unter Einbeziehung der Verbindungsleitungen (LK...) zwischen den einzelnen Schnittstellensteuermodulen (PPICM...) adressengesteuert hergestellt wird.

2. Prozessorsystem nach Anspruch 1, das als Monoprozessorsystem durch Vervielfachung modulartig zu einem Multiprozessorsystem erweiterbar ist,
**dadurch gekennzeichnet,** daß für jedes Monoprozessorsystem ein Schnittstellensteuermodul (PPICM...) mit Prozessorschnittstellen (PSST...) für alle Prozessoren (z.B. CPU, IOS, GSA) des jeweiligen Monoprozessorsystems vorgesehen ist.

3. Prozessorsystem nach Anspruch 1 oder 2,
**dadurch gekennzeichnet,**
- daß die einzelnen Schnittstellensteuermodule (PPICM...) der verschiedenen Prozessoren oder Monoprozessorsysteme (K...) über bidirektionale Verbindungsleitungen mit mehreren anderen Schnittstellensteuermodulen gekoppelt sind, von denen jeweils nur eine ankommende und eine abgehende Verbindungsleitung (LK...) zur Herstellung der Ringverbindung für die Schnittstellensteuermodule (PPICM...) genutzt wird und
- daß die Verbindungsleitungen (LK...) zwischen den einzelnen Schnittstellensteuermodulen (PPICM...) so angeordnet sind, daß bei Ausfall einer Verbindungsleitung oder eines Prozessors bzw. eines Monoprozessorsystems mit zugehörigem Schnittstellensteuermodul die gestörte ursprüngliche Ringverbindung durch eine alternative Ringverbindung oder durch eine Ringverbindung für die restlichen Schnittstellensteuermodule ersetzbar ist.

4. Prozessorsystem nach Anspruch 3,
**dadurch gekennzeichnet,** daß die jeweilige Ringverbindung allein durch Wirksamschalten jeweils nur einer der ankommenden Verbindungsleitungen (LK...) in jedem Schnittstellensteuermodul (PPICM...) hergestellt wird, während über die Ringverbindung weiterzuleitende Steuernachrichten parallel auf alle vorhandenen abgehenden Verbindungsleitungen gegeben werden.

5. Prozessorsystem nach Anspruch 4,
**dadurch gekennzeichnet,** daß die Auswahl der jeweils wirksam zu schaltenden ankommenden Verbindungsleitung (LK...) abhängig von einem in jedem Schnittstellensteuermodul (PPICM...) vorhandenen und durch den Serviceprozessor (SVP) voreinstellbaren Steuerregister (MREG) erfolgt.

6. Prozessorsystem nach einem der Ansprüche 3 bis 5,
**dadurch gekennzeichnet,** daß für jedes Schnittstellensteuermodul (PPICM...) vier ankommende und vier abgehende Verbindungsleitungen (LK...) vorgesehen sind.

7. Prozessorsystem nach einem der Ansprüche 1 bis 6,
**dadurch gekennzeichnet,**
- daß das Vorliegen einer zu übertragenden Steuernachricht von allen an ein Schnittstellensteuermodul (PPICM...) angeschlossenen Sendequellen (CPU, IOS, GSU, LK) in einheitlicher Weise durch ein gesondertes Anforderungssignal (SALERT bzw. REQ) der zugehörigen Schnittstelle (PSST..., LKSST) des Schnittstellensteuermoduls (PPICM...) gemeldet wird,
- daß aufgrund des Anforderungssignals (SALERT, REQ) anhand der in der Steuernachricht enthaltenen Zieladresse (RAD) ein individuelles Anforderungssignal (x.REQ...) für das vom Schnittstellensteuermodul (PPICM...) anzusteuernde Ziel (CPU, IOS, GSA bzw. LK...) abgeleitet wird,
- daß die Steuerschaltung (PRIOCTL.../MUX...) anhand der individuellen Anforderungssignale das jeweils bevorrechtigte Anforderungssignal ausgewählt und die zugehörige Steuernachricht zusammen mit einem Anforderungssignal (RALERT..., REQ.LK) an das zugehörige Ziel (PSST..., LK...) weiterleitet.

8. Prozessorsystem nach Anspruch 7,
**dadurch gekennzeichnet,** daß jeweils von den auf dasselbe Ziel (z.B. CPU) gerichteten individuellen Anforderungssignalen (x.REQ.CPU) aller Sender (x) am Schnittstellensteuermodul das jeweils bevorrechtigte Anforderungssignal (z.B. LK.REQ.CPU) ausgewählt wird und ein dem jeweiligen Ziel (CPU) zugeordnetes Auswahlschaltglied (MUX1) die zugehörige Steuernachricht von der berücksichtigten Senderschnittstelle (LKSST) für die Weiterleitung an die jeweilige Empfangsschnittstelle (PSST1) freigibt.

9. Prozessorsystem nach Anspruch 7 oder 8,
**dadurch gekennzeichnet,** daß zur Ableitung der individuellen Anforderungssignale (x.REQ...) die in der Steuernachricht enthaltene Zieladresse (RAD) einem, vom gesonderten Anforderungssignal (SALERT/REQ) freigegebenen Decoder (REQ-DEC) zugeführt wird, dem ein Pufferregister (REQ-REG) für die individuellen Anforderungssignale (x.REQ...) nachgeschaltet ist, und daß das Pufferregister mit der Durchschaltung des gewünschten Verbindungsweges wieder zurückgesetzt wird.

10. Prozessorsystem nach Anspruch 8,
**dadurch gekennzeichnet,** daß bei von den Prozessorschnittstellen (PSST...) ausgehenden Anforderungen die Übernahme in das Pufferregister (REQ-REG) und damit die Annahme einer Anforderung von einer Kontrolleinrichtung (CTL) abhängig ist, die die Steuernachricht auf das Vorliegen von Parameterfehlern bzw. einer unzulässigen Zieladresse (RAD) überprüft und gegebenenfalls eine Fehlermeldung (ERR) erzeugt, während bei einer fehlerfreien Steuernachricht die Übernahme erfolgt und die Annahme dem sendenden Prozessor (z.B. CPU) signalisiert wird.

11. Prozessorsystem nach Anspruch 9 oder 10,
**dadurch gekennzeichnet,**
- daß bei von einem Prozessor (z.B. CPU) ausgehenden Steuernachrichten, die statt an einen einzelnen Empfänger an eine oder mehrere Gruppen von gleichartigen Prozessoren (z.B. CPU und/oder IOS) zu richten sind, eine entsprechende Steuerinformation in der Steuernachricht ebenfalls vom jeweiligen Anforderungsdecoder (REQ-DEC) ausgewertet wird, der dann ein eine Gruppensteuernachricht kennzeichnendes Steuersignal (x.SETBC) und parallel dazu individuelle Anforderungssignale (x.REQ...) für alle von der Steuernachricht betroffenen lokalen Prozessoren (z.B. IOS) und für die abgehende Verbindungsleitung (LK...) erzeugt,
- daß das Steuersignal (x.SETBC) die Hinterlegung der zugehörigen Steuernachricht zusammen mit einem Gültigkeitsbit (V) in einem der Prozessorschnittstelle (PSST...) zugeordneten Register (...-BCR) veranlaßt,
- daß jede über die ankommende Verbindungsleitung (LK...) ankommende Steuernachricht (LKDAT) durch den zugehörigen Anforderungsdecoder (REQ-DEC) auf das Vorliegen einer Gruppensteuernachricht überprüft wird,
- daß der Anforderungsdecoder (REQ-DEC) bei Vorliegen einer Gruppensteuernachricht ein entsprechendes Steuersignal (BCGLOP) zusammen mit individuellen Anforderungssignalen (LK.REQ...) für alle von der Gruppensteuernachricht betroffenen Prozessoren und für die abgehende Verbindungsleitung (LK...) erzeugt,
- daß die ankommende Steuernachricht außerdem abhängig von einer mitgeführten Information (DAD0/1) über den die Gruppensteuernachricht veranlassenden Prozessor (CPU, IOS oder GSA) mit der für diesen Prozessor hinterlegten gültigen Steuernachricht verglichen wird und
- daß bei Übereinstimmung der Parameter der verglichenen Steuernachrichten in Verbindung mit dem bei einer Gruppensteuernachricht erzeugten Steuersignal (BCGLOP) die vom Anforderungsdecoder (REQ-DEC) erzeugten individuellen Anforderungssignale (LK.REQ...) nicht wirksam werden, so daß eine Weiterleitung der Steuernachricht unterbleibt, und stattdessen ein Rücksetzsignal (RESBC.x) für das jeweils zugehörige Gültigkeitsbit (V) und für das eine Gruppensteuernachricht an der zugehörigen Prozessorschnittstelle (PSST...) anzeigende Steuersignal (x.SETBC) erzeugt wird.

12. Prozessorsystem nach Anspruch 11, bei dem an jedes Schnittstellensteuermodul (PPICM...) lediglich Prozessoren unterschiedlichen Typs (CPU bzw. IOS bzw. GSA) anschließbar sind,
**dadurch gekennzeichnet,** daß statt der Information über den eine Gruppensteuernachricht veranlassenden Prozessor eine Information (DAD0/1) über den Typ des veranlassenden Prozessors in der Steuernachricht mitgeführt wird.

13. Prozessorsystem nach einem der Ansprüche 1 bis 12,
**dadurch gekennzeichnet,** daß in den einzelnen Schnittstellensteuermodulen (PPICM...) die Verarbeitung einer Anforderung (SALERT, REQ) und die Weiterleitung der zugehörigen Steuernachricht (DAT) in einem aus mehreren Phasentakten (T...) bestehenden Arbeitszyklus erfolgt, indem mit einem vorgegebenen Phasentakt die Anforderungen (SALERT, REQ) und die Steuernachrichten (DAT) in Abfangregister übernommen werden, während mit nachfolgenden Phasentakten die Anforderungen ausgewertet worden und der gewünschte Verbindungsweg ermittelt wird, so daß mit einem weiteren Phasentakt der gewünschte Verbindungsweg zur Empfängerschnittstelle durchgeschaltet und die Steuernachricht aus dem Abfangregister weitergeleitet werden kann.

14. Prozessorsystem nach Anspruch 13,
**dadurch gekennzeichnet,** daß durch gekoppelte Synchronisierungseinrichtungen (SYNC...) in den einzelnen Schnittstellensteuermodulen (PPICM...) die Arbeitszyklen in allen Schnittstellensteuermodulen synchron ablaufen.

15. Prozessorsystem nach Anspruch 13 oder 14,
**dadurch gekennzeichnet,**
- daß über die Verbindungsleitung (LK...) eintreffende Anforderungen (REQ) gegenüber den von den Prozessorschnittstellen (PSST...) ausgehenden Anforderungen (SALERT) bevorrechtigt sind und
- daß von den Prozessorschnittstellen (PSST...) jeweils nur eine Anforderung (SALERT) entgegengenommen wird und die jeweilige Prozessorschnittstelle (PSST...) gegenüber dem angeschlossenen Prozessor (z.B. CPU) solange als belegt gekennzeichnet wird (Signal BUSY), bis die mit der Anforderung verbundene Steuernachricht bei einem lokalen Empfänger an die zugehörige Empfängerschnittstelle weitergeleitet ist oder bis bei einer an das in der Ringverbindung folgende Schnittstellensteuermodul (PPICM...) über die abgehende Verbindungsleitung (LK...) weiterzuleitenden Steuernachricht eine vorgegebene Mindestzeitdauer vergangen ist, die sicherstellt, daß alle Prozessoren (z.B. CPU, IOS, GSA) der Schnittstellensteuereinheit (PPIC) innerhalb dieser Zeitdauer wenigstens einmal eine Steuernachricht über die jeweils abgehende Verbindungsleitung des zugehörigen Schnittstellensteuermoduls (PPICM...) absetzen können.

16. Prozessorsystem nach Anspruch 14 und 15,
**dadurch gekennzeichnet,** daß die Mindestzeitdauer bei insgesamt n Prozessoren (CPU, IOS, GSA) wenigstens (n+l) Arbeitszyklen entspricht.
